# EUROPEAN PATENT APPLICATION

(11) **EP 4 191 327 A1**
(43) Date of publication of application: **07.06.2023**
(21) Application number: 21857252.7
(22) Date of filing: 21.05.2021
(51) Int. Cl.: G02F 1/03

(54) **SPATIAL LIGHT MODULATOR AND SELECTIVE WAVELENGTH SWITCH**

(30) Priority: 21.08.2020 CN 202010849168
(71) Applicant: Huawei Technologies Co., Ltd., Shenzhen, Guangdong 518129 (CN)
(72) Inventor: LI, Tenghao, Shenzhen, Guangdong 518129 (CN); HAN, Luo, Shenzhen, Guangdong 518129 (CN); XIANG, Hui, Shenzhen, Guangdong 518129 (CN)
(74) Representative: Isarpatent
(86) International application number: PCT/CN2021/095241
(87) International publication number: WO 2022/037151

(57) **Abstract**

A spatial light modulator (10) and a wavelength selective switch (100) are provided. The spatial light modulator (10) includes a backplane (110) inside which a drive circuit (111) is disposed, a phase adjustment unit (20), an electrode (30), and an electrical connection portion (40). The phase adjustment unit (20) includes a lower cavity mirror (21), a cavity layer (22), and an upper cavity mirror (23), and the lower cavity mirror (21) is located between the cavity layer (22) and the backplane (110). The electrode (30) includes a first electrode (31) and a second electrode (32), and the electrode (30) is located inside or on a surface of the phase adjustment unit (20), and is located on a side that is of the lower cavity mirror (21) and that faces away from the backplane (110). The electrical connection portion (40) is electrically connected to the electrode (30) and the drive circuit (111), to form a drive electric field between the first electrode (31) and the second electrode (32), and adjust a refractive index of the phase adjustment unit (20). In this way, a duty cycle can be improved when light conversion with a low insertion loss and high efficiency is implemented.

## Description

This application claims priority to Chinese Patent Application No. 202010849168.5, filed with the China National Intellectual Property Administration on August 21, 2020 and entitled "SPATIAL LIGHT MODULATOR AND WAVELENGTH SELECTIVE SWITCH", which is incorporated herein by reference in its entirety.

### TECHNICAL FIELD

This application relates to the optical communications field, and in particular, to a spatial light modulator and a wavelength selective switch.

### BACKGROUND

An optical network is developing and evolving continuously toward a large capacity, a low latency, and intelligence. Optical switching technologies such as a ROADM (Reconfigurable Optical Add-Drop Multiplexer, reconfigurable optical add/drop multiplexer) and OXC (Optical Cross-Connect, optical cross-connect) not only support a current commercial optical network, but also are one of key technologies for implementing a nextgeneration optical network. A WSS (Wavelength selective switch, wavelength selective switch) is a core device of OXC, and there is an urgent requirement and a practical value to expand a port/channel of the WSS.

With expansion of the port/channel, how to improve a duty cycle when light conversion with a low insertion loss and high efficiency is implemented, so that the spatial light modulator and the wavelength selective switch have advantages of small sizes and high performance is a development trend of the industry.

### SUMMARY

Embodiments of this application provide a spatial light modulator and a wavelength selective switch, to improve a duty cycle when light conversion with a low insertion loss and high efficiency is implemented.

To achieve the foregoing objective, the following technical solutions are used in implementations of this application:

According to a first aspect, an embodiment of this application provides a spatial light modulator, including a backplane, a phase adjustment unit, an electrode, and an electrical connection portion. A drive circuit is disposed inside the backplane. The phase adjustment unit includes a lower cavity mirror, a cavity layer, and an upper cavity mirror that are sequentially disposed in a stacked manner on the backplane, and the lower cavity mirror is located between the cavity layer and the backplane. The electrode includes a first electrode and a second electrode that are insulated from each other, and the electrode is located inside or on a surface of the phase adjustment unit, and is located on a side that is of the lower cavity mirror and that faces away from the backplane. Specifically, the electrode and the phase adjustment unit form an integrated structure. The electrode is manufactured inside or on the surface of the phase adjustment unit in a process of manufacturing the phase adjustment unit, or the electrode may be disposed on a surface of a manufactured phase adjustment unit in this application. The electrical connection portion is electrically connected to the electrode and the drive circuit, to form a drive electric field between the first electrode and the second electrode and adjust a refractive index of the phase adjustment unit, so as to further modulate a phase of an optical signal. In this application, the electrode is formed on the phase adjustment unit, and is located on the side that is of the lower cavity mirror and that faces away from the backplane, so that the electrode and the phase adjustment unit are integrated. In other words, disposing of the electrode does not occupy space of the backplane around the phase adjustment unit, to help improve a duty cycle of the spatial light modulator and save space of the backplane.

In a conventional design of the spatial light modulator, the electrode and a phase correction unit are usually separately disposed on the backplane, the electrode is located around the phase correction unit, and the electrode occupies an area around the phase adjustment unit on the backplane. In this case, the spatial light modulator occupies a large area of the backplane. In addition, for the drive electric field formed by using the electrode, only a part of the electric field acts on the phase correction unit, and a part of the electric field is in peripheral space of the phase correction unit, and cannot act on the phase correction unit. Therefore, a voltage loaded onto the electrode needs to be greater than a drive voltage required by the phase adjustment unit. This is inconducive to energy saving, and driving efficiency is low.

In this application, the electrode is directly manufactured on the phase adjustment unit. Only the drive voltage required by the phase adjustment unit needs to be loaded onto the electrode, and a large drive voltage is not required. There are advantages such as a small insertion loss, a low power, and efficient conversion.

In a possible implementation, the drive circuit, the phase adjustment unit, the electrode, and the connection portion jointly form one pixel unit, the spatial light modulator includes a plurality of pixel units, the plurality of pixel units are distributed in an array, and phase adjustment units of adjacent pixel units are seamlessly connected. In this implementation, the plurality of pixel units are closely disposed next to each other on the backplane, and there is an architecture in which the phase adjustment units of the adjacent pixel units are seamlessly connected, so that a miniaturization design of the spatial light modulator is easily achieved. In addition, the architecture in which the phase adjustment units of the adjacent pixel units are seamlessly connected is conveniently manufactured. In a manufacturing process, phase adjustment units of the plurality of pixel units that are distributed in an array are simultaneously manufactured, and a channel does not need to be disposed between adjacent phase adjustment units after manufacturing. Manufacturing costs are low, and a yield is high.

The phase adjustment unit in the spatial light modulator provided in this application has an architecture of a solid-state layered structure. In an implementation, a structure of the phase adjustment unit is similar to an asymmetric FP (Fabry-Perot, Fabry-Perot) microcavity structure, and the lower cavity mirror, the cavity layer, and the upper cavity mirror of the phase adjustment unit each have an architecture of a plurality layers of layered structures (or film structures). The lower cavity mirror is a reflective layer including a plurality of layers of layered structures (or a film structure) or is a metal reflective layer, reflectivity of the lower cavity mirror is close to or equal to 1, and corresponding layered structures between different pixels may communicate to form one layer. In other words, in a process of manufacturing the lower cavity mirror on the backplane, a large-area reflective layer may be directly manufactured, and may cover the plurality of pixel units distributed in an array, and a region corresponding to each pixel unit is a lower cavity mirror of the pixel unit. A material of the cavity layer and the upper cavity mirror is a material having an electro-optical effect, for example, BTO (BaTiO3, Barium titanate, Barium titanate), or Si (silicon, for example, a Si nanomaterial), and a response rate of such a material is at a magnitude of GHz. To form an asymmetric architecture of a phase adjustment unit of an FP microcavity structure, a structure such as a Si nanowire or a nanopillar may be manufactured on a surface of the upper cavity mirror. Therefore, the phase adjustment unit provided in this application may implement phase modulation in which a change in a wavefront amplitude of the optical signal is close to 0. The spatial light modulation unit provided in this application can perform pure phase modulation on the optical signal, and does not change light intensity.

The phase adjustment unit may include a body region and an edge region, the edge region is located on a periphery of the body region and surrounds the body region, the body region is equivalent to a functional region of the phase adjustment unit, the electrode is disposed in the body region, and the electrical connection portion may be located in the edge region. The phase adjustment unit provided in this application is of an integrated structure, division into the body region and the edge region does not mean that the phase adjustment unit can be divided into two parts. In this implementation, it is emphasized that the body region is a region in which the electrode is disposed. It can be understood that disposing of the electrode cannot cover all regions of the phase adjustment unit, and the edge region needs to be reserved. In other words, the electrode is not disposed in the edge region, but the electrical connection portion may be disposed in the edge region. When a voltage is loaded onto the electrode, a generated drive electric field is also located in the body region, to change only a refractive index of the body region. The body region performs phase adjustment on the optical signal, and the edge region does not affect the optical signal due to absence of the drive electric field. Therefore, body regions of adjacent pixel units are separated by edge regions, to generate no crosstalk when the adjacent pixel units perform phase adjustment on the optical signal.

In another implementation, the electrode may not only be disposed in the body region. Instead, the electrode may alternatively extend to the edge region. However, the electrical connection portion is configured, so that even if the drive electric field is generated only in the body region when the electrode is in a powered-on state, it can be ensured that drive electric fields of adjacent pixel units are isolated from each other, to generate no crosstalk when the adjacent pixel units perform phase adjustment on the optical signal.

The electrode is of a transparent material. Therefore, transmittance of the body region is not affected when the electrode is disposed in the body region. The electrode may be in a form of a nanowire. In a specific implementation, a material of the electrode may be doped Si. In this application, the first electrode and the second electrode and the phase adjustment unit are integrated. It can be understood that the first electrode and the second electrode are formed on a layered structure of the cavity layer and the upper cavity mirror of the phase adjustment unit. In a process in which the first electrode and the second electrode are formed on a layered structure of the cavity layer and the upper cavity mirror, a doped Si process and an etching process are used to obtain a Si nanowire (which is the first electrode and the second electrode). One of the first electrode and the second electrode is electrically connected to a reference voltage of the drive circuit, and the other is grounded, so that a drive electric field is formed when the voltage is loaded.

A material of the electrical connection portion may be a non-transparent material, for example, a metal material, the electrical connection portion is disposed in the edge region, and the non-transparent material of the electrical connection portion does not affect transmittance of the phase adjustment unit. The electrical connection portion may include a first electrical connection portion and a second electrical connection portion, the first electrical connection portion is electrically connected between the first electrode and the drive circuit, and the second electrical connection portion is electrically connected between the second electrode and the drive circuit. Specifically, the connection portion includes a pad and a conductive portion electrically connected between the pad and the drive circuit, the pad and the electrode may be located in a same layered structure, and the conductive portion may be in a form of a via lead. Specifically, in a manufacturing process, a via may be formed between the layered structure in which the pad is located and the backplane, a metal conductive wire or a metal conductive pillar may be disposed in the via, or a metal layer may be formed on an inner wall of the via through electroplating, to form the conductive portion.

In a possible implementation, the electrode is disposed on a first surface. In other words, the first electrode and the second electrode are disposed in a coplanar manner. The first electrode and the second electrode are manufactured at a same layer of layered structure in a manufacturing process. The phase adjustment unit includes a plurality of layered structures that are sequentially disposed in a stacked manner, and the first surface is a surface of one layered structure. The first surface may be a surface that is of the upper cavity mirror and that faces away from the cavity layer. Specifically, the lower cavity mirror, the cavity layer, and the upper cavity mirror each may have an architecture in which one or more layers of layered structures are sequentially stacked. It only needs to be ensured that the first surface is not disposed in the lower cavity mirror. The first surface may be located in a specific layered structure of the cavity layer, or a specific layered structure of the upper cavity mirror, or a layered structure between the cavity layer and the upper cavity mirror, or a layered structure on a side that is of the upper cavity mirror and that faces away from the cavity layer.

In a possible implementation, the electrode is in an interdigital electrode architecture. Specifically, the first electrode includes a first main line and at least two first branches extending from one side of the first main line, the second electrode includes a second main line and at least two second branches extending from one side of the second main line, the first main line and the second main line are disposed opposite to each other, and the first branch and the second branch form an interdigital architecture.

In a possible implementation, the first branch and the second branch are linear. Specifically, the first branch and the second branch may be disposed in parallel and each are perpendicular to the first main line or the second main line. An included angle may also be formed between each of the first branch and the second branch and each of the first main line and the second main line. When the included angle is 90 degrees, the perpendicular state exists. The included angle may be less than 90 degrees, for example, 60 degrees, 75 degrees, or the like. This is not limited in this application.

In a possible implementation, the first branch and the second branch are curved. Shapes of the first branch and the second branch may be specifically an S shape, a C shape, an arc shape, or another irregular curved shape.

In a possible implementation, the electrical connection portion includes a first connection portion and a second connection portion that are insulated from each other, the first connection portion is connected to the first main line, the second connection portion is connected to the second main line, and the first connection portion and the second connection portion are distributed on two opposite sides of the electrode. Specifically, the first connection portion and the second connection portion are located in the edge region of the phase adjustment unit. The first connection portion and the second connection portion may be of a non-transparent material, for example, a metal material. The non-transparent material has an advantage of low costs. The electrical connection portion is disposed in the edge region, the edge region is an isolation region between body regions of adjacent phase adjustment units, and the electrode does not form a drive electric field in this region. Therefore, the edge region does not need to be transparent, and the non-transparent electrical connection portion may be disposed in the edge region. Therefore, not only transmittance of the body region of the phase adjustment unit is ensured, to increase the transmittance, but also low costs of the spatial light modulator can be implemented.

In a possible implementation, the first electrode and the second electrode synchronously extend in parallel from a first location on the first surface to a second location on the first surface. The first electrode and the second electrode are disposed in an insulated manner. Specifically, the first electrode and a path extending from the first electrode are in a shape of two concentric squares, a serpentine shape, or a spiral shape. A path extending from the first electrode and the second electrode includes a plurality of straight lines that are continuously connected, or a continuous curve. In this architecture, both the first connection portion and the second connection portion of the electrical connection portion may be located at the first location, and the first location is located at an outer edge of the electrode. The first location is located in the edge region of the phase adjustment unit. In another implementation, the electrical connection portion may alternatively be disposed at the second location, or the first electrical connection portion and the second electrical connection portion are respectively disposed at the first location and the second location. If the second location is disposed in the body region of the phase adjustment unit, the electrical connection portion located at the second location may be made of a transparent material, to avoid affecting light transmission.

In a possible implementation, the lower cavity mirror, the cavity layer, and the upper cavity mirror are sequentially disposed in a stacked manner in a first direction. The first direction may be understood as a direction perpendicular to the backplane. The first electrode and the second electrode are alternately disposed in a stacked manner in the first direction. In other words, in this implementation, the first electrode and the second electrode are not located at a same layer (a same layer of the phase adjustment unit), but are formed at different layers of the phase adjustment unit. It can be understood that each of the first electrode and the second electrode is of a film layered structure, and is distributed at a specific layer of the cavity layer or at a specific layer of the upper cavity mirror in a planar manner. Different electrodes are located at different layers, and adjacent electrodes are isolated by an insulation layer. The insulation layer is a specific layer of the phase adjustment unit, and may be an electro-optical medium. The first electrode and the second electrode are alternately disposed in a stacked manner. To be specific, a second electrode is disposed in a layered structure adjacent to one first electrode, and a first electrode is disposed in a layered structure adjacent to one second electrode. One first electrode may be sandwiched between two adjacent second electrodes.

In a possible implementation, the electrode is located inside the cavity layer. An advantage of manufacturing the electrode inside the cavity layer is as follows: A manufacturing process is simple, because the cavity layer is of a single material, and whether transmittance or reflectivity is generated does not need to be considered. For the cavity layer, transmittance is controlled by using the material of the cavity layer, instead of being controlled by using a specific structure of the cavity layer. The electrode changes the structure of the cavity layer, but imposes small impact on the transmittance, because the transmittance is controlled by using the material.

In a possible implementation, the electrode is located in the upper cavity mirror, and a principle of manufacturing the electrode in the upper cavity mirror is the same as a principle of manufacturing the electrode inside the cavity layer. The upper cavity mirror mainly forms an asymmetric structure, but the asymmetric structure is mainly formed at the top of the upper cavity mirror, namely, a surface that is of the upper cavity mirror and that faces away from the cavity layer.

In an implementation, some electrodes are located at the cavity layer, and some electrodes are located in the upper cavity mirror.

In an implementation in which the electrode is of a multi-layer structure, a specific architecture of the electrical connection portion may be as follows: The electrical connection portion includes a first connection portion and a second connection portion that are insulated from each other, the first electrode and the second electrode partially overlap, a part that is of the first electrode and that does not overlap the second electrode is connected to the first connection portion, and a part that is of the second electrode and that does not overlap the first electrode is connected to the second connection portion.

In a possible implementation, when the electrode has a multi-layer architecture, there are two or more first electrodes, and there are two or more second electrodes. Because an electric field is generated when the first electrode and the second electrode are in a powered-on state, two or more electrodes are disposed, so that a required electric field can be generated by using a small voltage. A quantity of layers of first electrodes or second electrodes may be controlled to be two or three, because if the quantity of layers is excessively large, for example, more than three, it is difficult to implement manufacturing. Therefore, a maximum quantity of layers of electrodes is 6. There are three layers of first electrodes and six layers of second electrodes.

A manufacturing process of each layer of electrode may include the following steps:
a sputtering process in which an electrode layer is manufactured on a surface of a specific layer of the phase adjustment unit through sputtering, and a material of the electrode layer may be doped silicon;
a photolithography process in which a photoresist layer is coated at the electrode layer, and a preset pattern of the photoresist layer is formed based on the photolithography process;
an etching process in which the preset pattern is formed at the electrode layer; and
a planarization process in which a patterned electrode is manufactured through planarization, and specifically, may be manufactured through polishing, for example, a chemical mechanical polishing process.

A quantity of layers of first electrodes does not need to be the same as a quantity of layers of second electrodes. For example, in a possible implementation, the electrode includes one layer of first electrode and two layers of second electrodes, or includes two layers of second electrodes and three layers of first electrodes.

In an implementation in which electrodes are located on a same surface, namely, in an implementation in which electrodes are formed on the first surface, a quantity of first electrodes may also be the same as a quantity of the second electrodes. For example, there is one first electrode, and there is one second electrode. There may be two or more first electrodes and second electrodes, and a quantity of corresponding electrical connection portions may be increased accordingly. The quantity of first electrodes and the quantity of second electrodes may alternatively be different. For example, one first electrode and two second electrodes form an electrode architecture.

In a possible implementation, a protruding structure is disposed on a surface that is of the phase adjustment unit and that faces away from the backplane. In other words, the protruding structure is formed at a topmost layer of the upper cavity mirror (namely, a layer that is of the upper cavity mirror and that faces away from the cavity layer). It can be further understood that the protruding structure is located on a side that is of the upper cavity mirror and that faces away from the cavity layer. In other words, the protruding structure is a structure independent of the upper cavity mirror. The protruding structure is disposed, so that the phase adjustment unit forms an asymmetric architecture, to suppress intensity modulation of the optical signal, so that the spatial light modulator provided in this application tends to perform pure phase modulation.

In a possible implementation, the electrode is disposed on a surface that is of the upper cavity mirror and that faces away from the cavity layer, a plurality of micropillar structures are disposed on a surface of the electrode, and the micropillar structure is configured to suppress intensity modulation of an optical signal, so that the spatial light modulator provided in this application tends to perform pure phase modulation.

In a possible implementation, the electrode is disposed on a surface that is of the upper cavity mirror and that faces away from the cavity layer, and an electro-optical medium is disposed between the first electrode and the second electrode, or an electro-optical medium is disposed between the first electrode and the second electrode and on a periphery of the electrode. In this implementation, the electrode is disposed on the surface that is of the upper cavity mirror and that faces away from the cavity layer. In an architecture in which the electrode is combined with the electro-optical medium, the electrode is formed on the surface of the upper cavity mirror, and a function of the protruding structure can be formed. In other words, the asymmetric structure is formed, so that the phase adjustment unit only adjusts a phase of the optical signal and does not affect intensity of the optical signal.

According to a second aspect, this application provides a wavelength selective switch, including an optical fiber array, a main lens, and the spatial light modulator in any possible implementation of the first aspect. A light beam found by the optical fiber array is converted into collimated light after passing through the main lens, the collimated light enters the spatial light modulator, a spatial light collimator is configured to reflect and deflect the collimated light to form reflected light, and the reflected light passes through the main lens and is focused in the optical fiber array.

### BRIEF DESCRIPTION OF DRAWINGS

FIG. 1 is a schematic diagram of an optical switching node networking system;
FIG. 2 is a schematic diagram of a wavelength selective switch according to an embodiment of this application;
FIG. 3 is a cutaway drawing of a backplane of a spatial light modulator according to an implementation of this application;
FIG. 4 is a plan view of a backplane of a spatial light modulator according to an implementation of this application;
FIG. 5 is a cutaway drawing of a spatial light modulator according to an implementation of this application;
FIG. 6 is a plan view of a spatial light modulator according to an implementation of this application;
FIG. 7 is a schematic diagram of a spatial light modulator according to an implementation of this application, where the spatial light modulator includes three phase adjustment units;
FIG. 8 is a schematic diagram of a spatial light modulator according to an implementation of this application, where the spatial light modulator includes three phase adjustment units, and that the phase adjustment unit includes a plurality of layers of layered structures is schematically shown;
FIG. 9 is a schematic diagram of a spatial light modulator according to an implementation of this application;
FIG. 10 is a schematic diagram of a spatial light modulator according to an implementation of this application;
FIG. 11 is a schematic diagram of a spatial light modulator according to an implementation of this application;
FIG. 12 is a schematic diagram of a spatial light modulator according to an implementation of this application;
FIG. 13 is a schematic diagram of an electrode distribution of a spatial light modulator according to an implementation of this application;
FIG. 14 is a schematic diagram of an electrode distribution of a spatial light modulator according to an implementation of this application;
FIG. 15 is a schematic diagram of an electrode distribution of a spatial light modulator according to an implementation of this application;
FIG. 16 is a schematic diagram of a spatial light modulator according to an implementation of this application;
FIG. 17 is a schematic diagram of a spatial light modulator according to an implementation of this application;
FIG. 18 is a schematic diagram of an electrode portion of a spatial light modulator according to an implementation of this application, where the electrode is provided with a micropillar structure;
FIG. 19 is a schematic diagram of a spatial light modulator according to an implementation of this application;
FIG. 20 is a schematic diagram of a multi-layer electrode architecture of a spatial light modulator according to an implementation of this application;
FIG. 21 is a schematic diagram of a spatial light modulator according to an implementation of this application;
FIG. 22 is a schematic diagram of a spatial light modulator according to an implementation of this application;
FIG. 23 is a schematic diagram of a spatial light modulator according to an implementation of this application;
FIG. 24 is a schematic diagram of an electric field distribution of an interdigital electrode architecture of a spatial light modulator according to an implementation of this application; and
FIG. 25 is a schematic diagram of an electric field distribution of an electrode of a multi-layer architecture of a spatial light modulator according to an implementation of this application.

### DESCRIPTION OF EMBODIMENTS

The following describes embodiments of this application with reference to accompanying drawings in embodiments of this application.

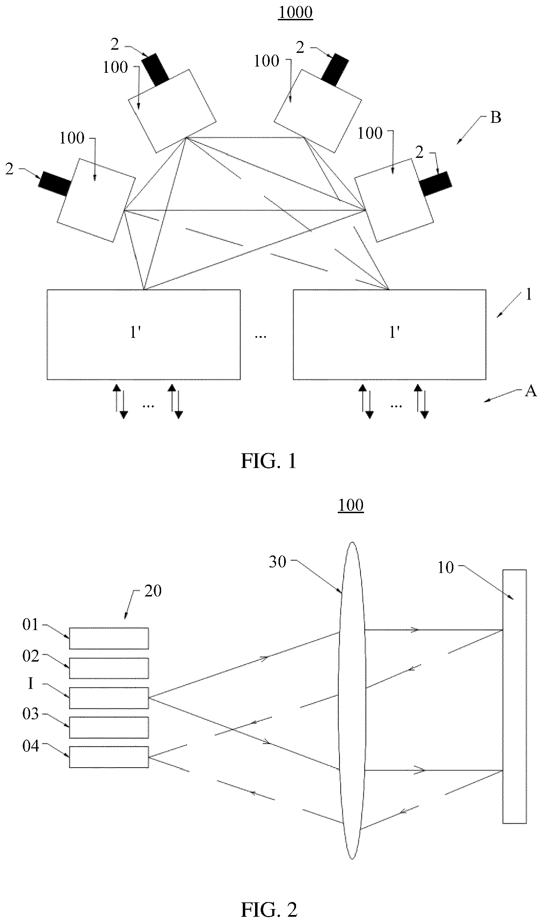

A wavelength selective switch (wavelength selective switch, WSS) provided in an embodiment of this application is applied to an optical switching node networking system. Refer to FIG. 1. An optical switching node networking system 1000 includes an upper/lower wavelength selective switch group 1 connected between a local A and a pass-through optical path B, and the upper/lower wavelength selective switch group 1 includes a plurality of upper/lower wavelength selective switches 1' connected in parallel between the local A and the pass-through optical path B. The upper/lower wavelength selective switch 1' is configured to: download an optical signal with a specific wavelength of the pass-through optical path B to the local A, or upload an optical signal with a specific wavelength of the local A to the pass-through optical path B. The local A can be understood as a local equipment room, and a device such as a card or a switch is disposed in the equipment room. The pass-through optical path B may be understood as an optical path formed by interconnecting a plurality of WSSs 100. Each WSS 100 is connected to another node by using a fiber 2.

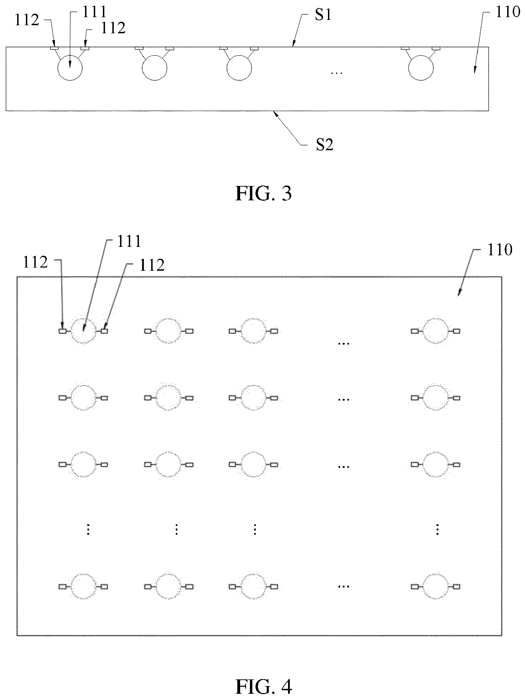

The wavelength selective switch provided in this embodiment of this application may be applied to a ROADM (Reconfigurable Optical Add-Drop Multiplexer, reconfigurable optical add-drop multiplexer). Refer to FIG. 2. The wavelength selective switch 100 includes a fiber array 20, a main lens 30, and a spatial light modulator 10 (Spatial Light Modulator, SLM). The optical fiber array 20 includes input/output port. FIG. 2 illustrates one output port I and four input ports O1, O2, O3, and O4. Locations of the output port I and the input ports O1, O2, O3, and O4 may be designed based on a specific application scenario, and are not limited to an architecture shown in FIG. 4: The output port I is located in the middle and two input ports are disposed on each of two sides of the output port I. An optical signal emitted from the output port I is incident light (namely, some light rays that are between the fiber array 20 and the main lens 30 in FIG. 2 and that are represented by solid lines whose arrows point to the main lens 30), and the main lens 30 is configured to convert the incident light into collimated light (namely, some light rays that are between the main lens 30 and the spatial light modulator 10 in FIG. 2 and that are represented by solid lines whose arrows point to the spatial light modulator 10). The spatial light modulator 10 is a phase type SLM, and is configured to change a phase of the optical signal. After the collimated light enters the spatial light modulator 10, the spatial light modulator 10 reflects and deflects a light beam. Deflected and reflected light is emitted light (namely, some light rays that are between the main lens 30 and the spatial light modulator 10 in FIG. 2 and that are represented by dotted lines whose arrows point to the main lens 30), and the emitted light passes through the main lens 30 and is focused and coupled to the input port O4.

The spatial light modulator provided in this application may also be applied to another application scenario, for example, an N x N WSS, an ADWSS, laser radar, or a laser display.

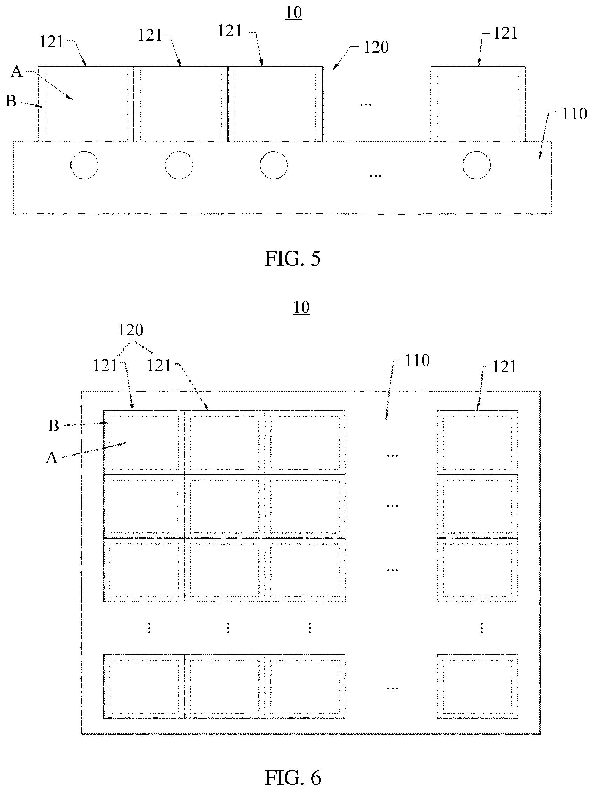

A spatial light modulator provided in this application is a phase type spatial light modulator, and adjusts a phase of an optical signal, but does not change intensity of the optical signal. As shown in FIG. 3 to FIG. 6, FIG. 3 and FIG. 4 are respectively a cross-sectional schematic diagram and a schematic plan view of a backplane 110, and FIG. 5 and FIG. 6 are respectively a cross-sectional schematic diagram and a schematic plan view of a spatial light modulator 10. The spatial light modulator 10 provided in this application includes the backplane 110 and a pixel array 120 formed on the backplane.

As shown in FIG. 3 and FIG. 4, a plurality of drive circuits 111 distributed in an array are disposed inside the backplane 110. For example, the drive circuits 111 are arranged in M rows and N columns. The drive circuit 111 is a circuit architecture manufactured inside the backplane 110, and may be formed at a specific layer or some layered structures on the backplane 110, or may be a separate electronic element built into the backplane 110. The backplane 110 may be a ceramic substrate or a substrate of another material, the backplane 110 includes a front surface S1 and a back surface S2 that are disposed opposite to each other, and the front surface S1 is configured to form the pixel array 120. Alternatively, it may be understood that the front surface S1 is a surface for manufacturing the phase adjustment unit. The front surface S1 is provided with an interface 112 electrically connected to the drive circuit 111, each drive circuit 111 corresponds to two interfaces 112, one interface 112 is electrically connected to a reference voltage of the drive circuit 111, and the other interface 112 is electrically connected to the ground of the drive circuit 111. The interface 112 may be of a pad structure, and a surface of the pad may be coplanar with the front surface S1, so that the front surface S1 remains planar, and the pixel array 120 may be easily manufactured.

With reference to FIG. 5 and FIG. 6, the pixel array 120 includes a plurality of pixel units 121 distributed in an array (for example, M rows and N columns), the pixel array 120 is manufactured on the front surface S1 of the backplane 110, the pixel units 121 are interconnected integrally, and adjacent pixel units 121 are seamlessly connected.

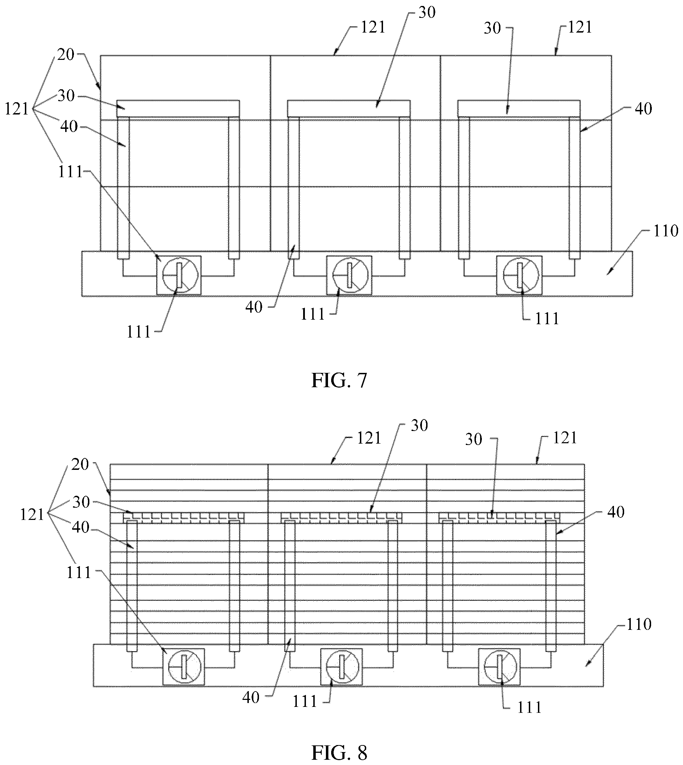

Refer to FIG. 7 and FIG. 8. The pixel units 121 have a same architecture, and each pixel unit 121 includes a drive circuit 111 (located inside the backplane 110), a phase adjustment unit 20 (formed on the front surface S1 of the backplane 110), an electrode 30 (formed in the phase adjustment unit 20), and an electrical connection portion 40 (formed in the phase adjustment unit 20). The phase adjustment unit 20 has an architecture of a solid-state layered structure. In terms of a structure, adjacent phase adjustment units 20 are interconnected integrally, and there is no gap between adjacent phase adjustment units 20. In other words, a plurality of phase adjustment units 20 distributed in an array are closely arranged one by one on the front surface S1 of the backplane 110, so that a miniaturization design of the spatial light modulator 10 is easily achieved. In terms of a manufacturing process, each phase adjustment unit 20 is formed by using a same manufacturing step, and a specific layered structure of all phase adjustment units 20 is simultaneously formed in all manufacturing steps. FIG. 8 schematically shows an architecture in which each pixel unit 121 includes a plurality of layers of layered structures, all the pixel units 121 include a same quantity of layers, and the layers are interconnected to form one layer. In particular, it can be learned that all electrodes 30 are located at a same layer. Because of such an architecture, the manufacturing process is simple and easy, and manufacturing costs are reduced. In this application, after the phase adjustment unit 20 is manufactured on the backplane, a channel does not need to be disposed between adjacent phase adjustment units 20. Manufacturing costs are low, and a yield is high.

Because all the pixel units 121 have a same architecture, a detailed architecture of one of the pixel units 121 is described in detail below.

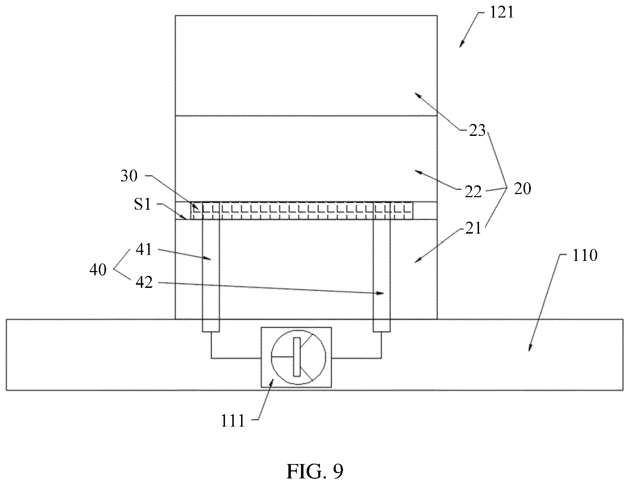

Refer to FIG. 9 to FIG. 12. The phase adjustment unit 20 includes a lower cavity mirror 21, a cavity layer 22, and an upper cavity mirror 23 that are sequentially disposed in a stacked manner on the backplane 110, and the lower cavity mirror 21 is located between the cavity layer 22 and the backplane 110. The phase adjustment unit 20 in the spatial light modulator provided in this application has an architecture of a solid-state layered structure. In an implementation, the phase adjustment unit 20 is of an asymmetric FP (Fabry-Perot, Fabry-Perot) microcavity structure, and the lower cavity mirror 21, the cavity layer 22, and the upper cavity mirror 23 each have an architecture of a plurality of layered structures (or film structures). The lower cavity mirror 21 is a reflective layer including a plurality of layers of layered structures (or a film structure) or is a metal reflective layer, reflectivity of the lower cavity mirror 21 is close to or equal to 1, and corresponding layered structures between different pixel units 121 may communicate to form one layer. In other words, in a process of manufacturing the lower cavity mirror 21 on the backplane 110, a large-area reflective layer may be directly manufactured, the large-area reflective layer may cover the plurality of pixel units 121 distributed in an array, and a partial region of the large-area reflective layer corresponding to each pixel unit 121 is the lower cavity mirror 21 of the pixel unit. A material of the cavity layer 22 and the upper cavity mirror 23 is a material having an electro-optical effect, for example, BTO (BaTiO3, Barium titanate, Barium titanate), or Si (silicon, for example, a Si nanomaterial), and a response rate of such a material is at a magnitude of GHz. A structure such as a Si nanowire or a nanopillar may be manufactured on a surface of the upper cavity mirror 23, to form an asymmetric FP microcavity structure. The asymmetric FP microcavity structure is designed, to implement phase modulation in which a change in a wavefront amplitude of the optical signal is close to 0. The spatial light modulation unit provided in this application can perform pure phase modulation on the optical signal, and does not change light intensity.

Refer to FIG. 5 and FIG. 6. The phase adjustment unit 20 may include a body region A and an edge region B. The edge region B is located at a periphery of the body region A, and surrounds the body region A. As shown in FIG. 5 and FIG. 6, the body region A is a part inside a dotted line box. It can be learned from FIG. 6 that the body region A is a square-shaped region, and the edge region B surrounds the body region A, and is a boxshaped region outside the body region A.

The phase adjustment unit 20 provided in this application is of an integrated structure, division into the body region A and the edge region B does not mean that the phase adjustment unit 20 can be divided into two parts. In an implementation, it can be understood that the body region A is a region in which the electrode 30 is disposed, disposing of the electrode 30 cannot cover all regions of the phase adjustment unit 20, and the edge region B needs to be reserved. In other words, the electrode 30 is not disposed in the edge region B, but the electrical connection portion 40 may be disposed in the edge region B.

The body region A is equivalent to a functional region of the phase adjustment unit 20, the electrode 30 is disposed in the body region A, and the electrical connection portion 40 may be located in the edge region. When a voltage is loaded onto the electrode, a generated drive electric field is also located in the body region, to change only a refractive index of the body region. The body region performs phase adjustment on the optical signal, and the edge region does not affect the optical signal due to absence of the drive electric field. Therefore, body regions of adjacent pixel units are separated by edge regions, to generate no crosstalk when the adjacent pixel units perform phase adjustment on the optical signal. In another implementation, the electrode 30 may alternatively be disposed in the body region A and the edge region B, the electrical connection portion 40 is located in the edge region, a region between electrical connection portions 40 is the body region A, and when a voltage is loaded, only some electrodes 30 in the body region A generates a drive electric field. In conclusion, in this application, it is ensured that the drive electric field is distributed in the body region A, and the drive electric field is not distributed in the edge region B. Therefore, drive electric fields of adjacent pixel units are isolated from each other, to avoid generating crosstalk for the optical signal by the adjacent pixel units.

In another implementation, the electrode 30 may not only be disposed in the body region A. Instead, the electrode 30 may alternatively extend to the edge region B. However, the electrical connection portion 40 is configured, so that even if the drive electric field is generated only in the body region A when the electrode 30 is in a powered-on state, it can be ensured that drive electric fields of adjacent pixel units are isolated from each other, to generate no crosstalk when the adjacent pixel units perform phase adjustment on the optical signal.

The electrode 30 includes a first electrode and a second electrode that are insulated from each other, the electrode 30 is located inside or on a surface of the phase adjustment unit 20, and the electrode 30 is located on a side that is of the lower cavity mirror 21 and that faces away from the backplane 110. The electrode 30 may be formed in the phase adjustment unit 20. Specifically, the electrode 30 may be simultaneously in a process of manufacturing the phase adjustment unit 20. The electrode 30 is formed at a specific layer or some layers in the middle of the phase adjustment unit 20, or is formed at a surface layer of the phase adjustment unit 20; or the electrode 30 may be disposed in the manufactured phase adjustment unit 20. The electrical connection portion 40 includes a first electrical connection portion 41 and a second electrical connection portion 42, the electrical connection portion 40 is electrically connected to the electrode 30 and the drive circuit 111, the first electrical connection portion 41 is electrically connected between the first electrode and the drive circuit 111, and the second electrical connection portion 42 is electrically connected between the second electrode and the drive circuit 111, to form a drive electric field between the first electrode and the second electrode, and adjust a refractive index of the phase adjustment unit 20.

In the embodiments shown in FIG. 9 to FIG. 12, the electrode 30 may be set to have a single-layer architecture.

For the electrode 30 of the single-layer architecture, it can be understood that the electrode 30 is disposed on the first surface S1, in other words, is disposed in a coplanar manner. The first electrode and the second electrode are manufactured at a same layer of layered structure in a manufacturing process. The phase adjustment unit 20 includes a plurality of layered structures that are sequentially disposed in a stacked manner, and the first surface S1 is a surface of one layered structure. Specifically, the lower cavity mirror 21, the cavity layer 22, and the upper cavity mirror 23 each may have an architecture in which one or more layers of layered structures are sequentially stacked. It only needs to be ensured that the first surface S1 is not disposed in the lower cavity mirror 21.

As shown in FIG. 9, the first surface S1 may be located at the cavity layer 22, and a location of the first surface S1 shown in FIG. 9 may be a surface of a bottom layer of the cavity layer 22, namely, a surface that is of the cavity layer 22 and that is adjacent to the lower cavity mirror 21. Certainly, the first surface S1 may alternatively be a surface of another layer of the cavity layer 22. The electrode 30 is on the first surface S1. The electrode 30 may cover a partial region of the first surface S1, or the electrode 30 may cover an entire region of the first surface S1.

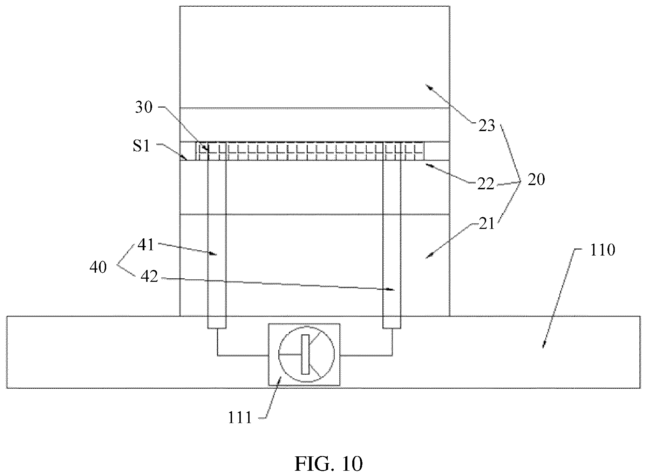

The embodiment shown in FIG. 10 differs from the embodiment shown in FIG. 9 in that the first surface S1 is a surface of a middle layer of the cavity layer 22, and the electrode 30 is located the middle layer of the cavity layer 22.

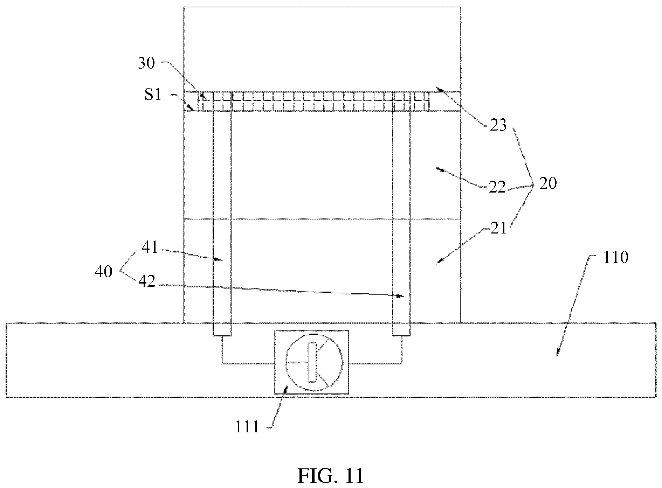

The embodiment shown in FIG. 11 differs from the embodiment shown in FIG. 9 in that the first surface S1 is a surface of a bottom layer of the upper cavity mirror 23 (namely, a surface that is of the upper cavity mirror 23 and that is adjacent to the cavity layer 22), and the electrode 30 is located at the bottom layer of the upper cavity mirror 23.

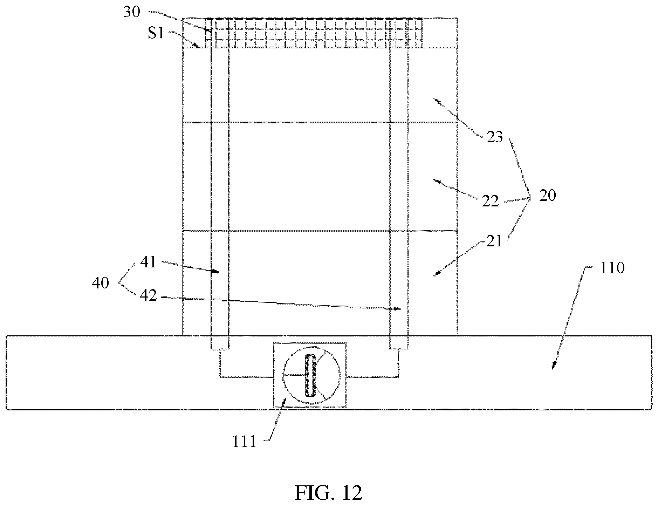

The embodiment shown in FIG. 12 differs from the embodiment shown in FIG. 9 in that the first surface S1 is a surface of a top layer of the upper cavity mirror 23, and the electrode 30 is located at the top layer of the upper cavity mirror 23. In other words, the electrode 30 is located in a layered structure on a side that is of the upper cavity mirror 23 and that faces away from the cavity layer 22.

For the electrode 30 of the single-layer architecture, a specific structure of the electrode 30 may be of an interdigital electrode architecture or a parallel electrode architecture.

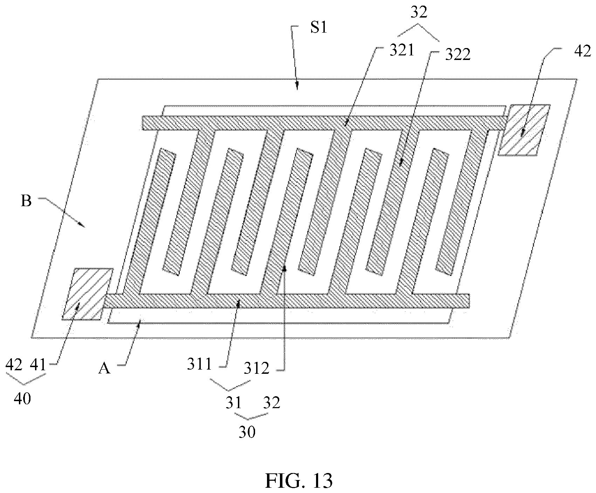

A possible implementation in which the electrode 30 is in the interdigital electrode architecture is as follows: Refer to FIG. 13. The electrode 30 is located in the body region A, and the electrical connection portion 40 is located in the edge region B. The electrode 30 includes a first electrode 31 and a second electrode 32, the electrical connection portion 40 includes a first electrical connection portion 41 and a second electrical connection portion 42, and a pad portion of the first electrical connection portion 41 and a pad portion of the second electrical connection portion 42 are shown on the first surface S 1. It can be understood that the first electrical connection portion 41 further includes a conductive portion (FIG. 13 only shows the pad portion, but does not show the conductive portion) connected between the pad and the drive circuit in a direction perpendicular to the first surface S1, and the second electrical connection portion 42 further includes a conductive portion electrically connected between the pad and the drive circuit in a direction perpendicular to the first surface S 1. The first electrode 31 includes a first main line 311 and at least two first branches 312 extending from one side of the first main line 311, and the second electrode 32 includes a second main line 321 and at least two second branches 322 extending from one side of the second main line 321. The first main line 311 and the second main line 321 are disposed opposite to each other, and the first branch 312 and the second branch 322 form an interdigital architecture. It can be understood as in an interdigital structure, the first branch 312 is inserted between two adjacent second branches 322, and the first branch 312 and the second branch 322 are arranged alternately. An arrangement rule may be a first branch 312, a second branch 322, a first branch 312, .... In the embodiment shown in FIG. 13, there are five first branches 312 and five second branches. The first branch 312 and the second branch 322 are linear, and each first branch 312 is parallel to and partially overlaps an adjacent second branch 322. Specifically, the first branch 312 and the second branch 322 may be disposed in parallel, and both are perpendicular to the first main line 311 or the second main line 321.

An included angle may be formed between each of the first branch 312 and the second branch 322 and each of the first main line 311 and the second main line 321. When the included angle is 90 degrees, the perpendicular state exists. The included angle may be less than 90 degrees, for example, 60 degrees, 75 degrees, or the like. This is not limited in this application.

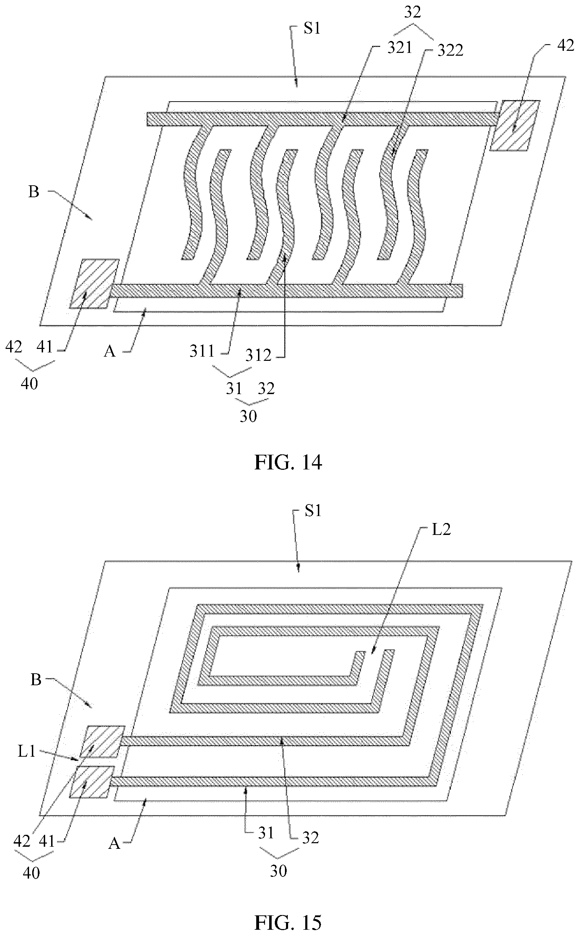

Refer to FIG. 14. The implementation shown in FIG. 14 differs from the implementation shown in FIG. 13 in that the first branch 312 and the second branch 322 are curved, and shapes of the first branch 312 and the second branch 322 may be specifically an S shape, a C shape, an arc shape, a spiral shape, or another irregular curved shape.

In another implementation, there are various solutions in which the first branch 312 and the second branch 322 may be a combination of a plurality of straight lines, for example, an L shape, or a combination of a straight line and a curve. This is not limited in this application.

Refer to FIG. 13 and FIG. 14. The first connection portion 41 is connected to the first main line 311, the second connection portion 42 is connected to the second main line 321, and the first connection portion 41 and the second connection portion 42 are distributed on two opposite sides of the electrode 30. Specifically, the first connection portion 41 and the second connection portion 42 are located in the edge region B of the phase adjustment unit 20. The first connection portion 41 and the second connection portion 42 may be of a non-transparent material, for example, a metal material. The non-transparent material has an advantage of low costs. The electrical connection portion 40 is disposed in the edge region B, the edge region B is an isolation region between body regions A of adjacent phase adjustment units 20, and the electrode 30 does not form a drive electric field in the edge region B in a powered-on state. Therefore, the edge region B does not need to be transparent, and the non-transparent electrical connection portion 40 may be disposed in the edge region B, to avoid disposing the non-transparent electrical connection portion 40 in the body region A. Therefore, not only transmittance of the body region A of the phase adjustment unit 20 is ensured, to increase the transmittance, but also isolation between adjacent phase adjustment units can be ensured, and low costs of the spatial light modulator can be implemented.

In a possible implementation in which the electrode 30 is of a parallel electrode architecture, referring to FIG. 15, the first electrode 31 and the second electrode 32 synchronously extend in parallel from a first location L1 on the first surface S1 to a second location L2 on the first surface S1. The first electrode 31 and the second electrode 32 are insulated and isolated. In the implementation shown in FIG. 15, the first electrode 31 and the second electrode 32 each are of an architecture of a main line, and there is no another branch. To meet a requirement of the drive electric field, in this application, a branch design is added to a main line architecture of the first electrode 31 and the second electrode 32 based on the implementation shown in FIG. 15. Specifically, the first electrode 31 and a path extending from the first electrode 32 are in a shape of two concentric squares, a serpentine shape, or a spiral shape. A path extending from the first electrode 31 and the second electrode 32 includes a plurality of straight lines that are continuously connected, or a continuous curve. In this architecture, both the first connection portion 41 and the second connection portion 42 of the electrical connection portion 40 may be located at the first location L1, and the first location L1 is located at an outer edge of the electrode 30. The first location L1 is located in the edge region B of the phase adjustment unit 20.

In another implementation, the electrical connection portion 40 may alternatively be disposed at the second location L2. Because the second location L2 is in the body region A, the electrical connection portion 40 needs to be set to be in a transparent state. Alternatively, although the electrical connection portion 40 is of a non-transparent material, the electrical connection portion 40 has a proper size, and does not affect transmittance of the body region A.

In another implementation, the first electrical connection portion 41 and the second electrical connection portion 42 may be respectively disposed at the first location L1 and the second location L2.

In the implementations shown in FIG. 13 to FIG. 15, a quantity of first electrodes 31 and a quantity of second electrodes 32 are the same, and each are one. In another implementation, for a coplanar single-layer electrode architecture, there may be at least two first electrodes 31 and second electrodes 32. For example, two first electrodes match two second electrodes, and a quantity of corresponding electrical connection portions 40 is increased accordingly. Alternatively, the quantity of first electrodes 31 and the quantity of second electrodes 32 may be different. For example, one first electrode 31 and two second electrodes 32 form an electrode architecture.

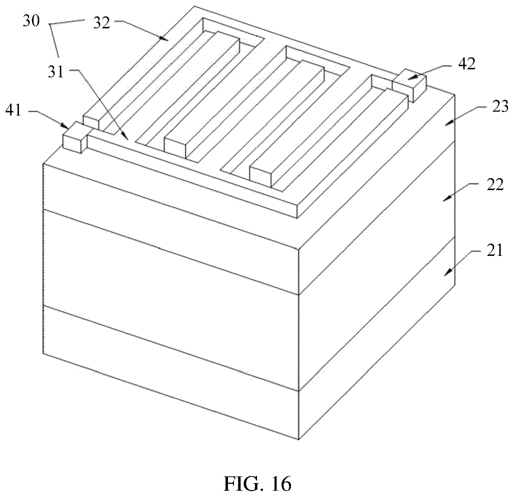

Refer to FIG. 16. In a possible implementation, the electrode 30 is disposed on a surface that is of the upper cavity mirror 23 and that faces away from the cavity layer 22. In this implementation, the electrode 30 is an interdigital electrode architecture, and a specific structure is similar to that in the embodiment shown in FIG. 13. In the implementation shown in FIG. 16, the first electrode 31 and the second electrode 32 protrude from a top surface of the upper cavity mirror 23, and the first electrical connection portion 41 and the second electrical connection portion 42 also protrude from the top surface of the upper cavity mirror 23. Air exists in a region between the first electrode 31 and the second electrode 32 and a region around the first electrode 31 and the second electrode 32.

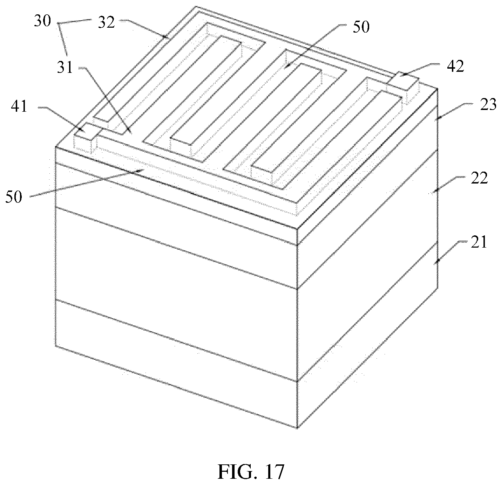

Refer to FIG. 17. This implementation differs from the implementation shown in FIG. 16 in that an electro-optical medium 50 is disposed between the first electrode 31 and the second electrode 32, and a material of the electro-optical medium 50 may be an EO polymer, LiNbO3, BTO, or the like. The electro-optical medium 50 may be further disposed on a periphery of the first electrode 31 and the second electrode 32. In this implementation, the first electrical connection portion 41 and the second electrical connection portion 42 are also surrounded by the electro-optical medium 50. It can be understood that the electrode 30 is built into the electro-optical medium 50, a top surface of the electrode 30 and a top surface of the electro-optical medium 50 may be coplanar, and the top surface of the electrode 30 may protrude from the top surface of the electro-optical medium 50. "Top surface" is a surface that is of the electrode 30 and the electro-optical medium 50 and that faces away from the upper cavity mirror 23. In this implementation, the electrode 30 is disposed on the surface that is of the upper cavity mirror 23 and that faces away from the cavity layer 22. In an architecture in which the electrode 30 is combined with the electro-optical medium 50, the electrode 30 is formed on a surface of the upper cavity mirror 23, and there may be a function corresponding to "a protruding structure is disposed on the surface of the upper cavity mirror, to implement an asymmetric structure". In other words, the electrode 30 and the electro-optical medium 50 form an asymmetric structure. Therefore, in this implementation, the phase adjustment unit 20 can implement phase adjustment of the optical signal, and does not affect intensity of the optical signal.

In the implementation shown in FIG. 17, it can be specifically understood that the upper cavity mirror 23 is a SiO2 layer whose thickness is 100 nm. In this implementation, the upper cavity mirror 23 may be considered as one layer of layered structure, and a material of the upper cavity mirror 23 is merely SiO2. In another implementation, the upper cavity mirror 23 may also include a plurality of layers of layered structures, and materials of two adjacent layers are different. For example, there is an arrangement similar to one SiO2 layer, one doped Si layer, one SiO2 layer, one doped Si layer, .... A doped Si layer whose thickness is 250 nm is formed on the surface of the upper cavity mirror 23, the doped Si layer is configured to manufacture the electrode 30, the doped Si layer is etched to obtain a Si nanowire (namely, the first branch and the second branch of the electrode 30), a width of the Si nanowire is 200 nm, a length is 1.8 um, and a central interval between adjacent nanowires is 400 nm. Then, an EO-polymer is filled in the central interval between adjacent nanowires, the EO-polymer is completely filled between the Si nanowires and on the periphery, the EO-polymer is also formed on the surface of the upper cavity mirror 23, and the Si nanowire and the EO-polymer jointly form one layer. A gap is formed between adjacent nanowires, and polarization directions of EO-polymers in adjacent gaps are opposite. Si nanowires (namely, the first branch of the first electrode) with odd sequence numbers (1, 3, and 5) are connected (in other words, constitute the first electrode) by using a horizontal lower Si strip structure (namely, the first main line of the first electrode), and are in contact with a top electrode of a metal via (namely, a pad of the first electrical connection portion). Si nanowires (namely, the second branch of the second electrode) with even sequence numbers (2, 4, and 6) are connected (in other words, constitute the second electrode) by using a horizontal upper Si strip structure (namely, the second main line of the second electrode), and are in contact with a top electrode of another metal via (namely, a pad of the second electrical connection portion). Horizontal Si stripe structures (namely, the first main line and the second main line) each have a width of 200 nm and a length of 2 um. To avoid a short circuit, a spacing between a Si nanowire (namely, the first branch) with an odd sequence number (1, 3, and 5) and the horizontal upper Si stripe structure (namely, the second main line) is 100 nm, and a spacing between a Si nanowire (namely, the second branch) with an even sequence number (2, 4, and 6) and the horizontal lower Si stripe structure (namely, the first main line) is 100 nm.

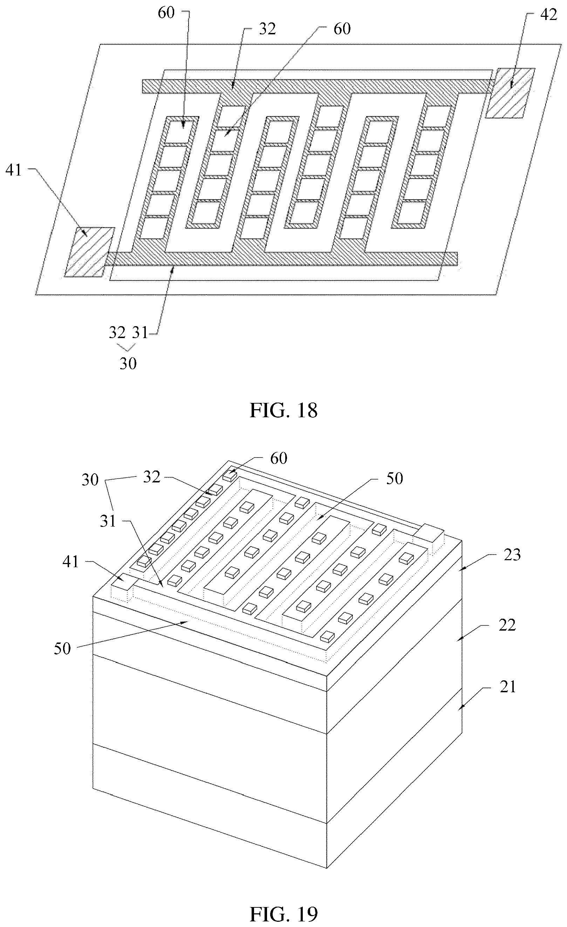

Refer to FIG. 18 and FIG. 19. When the electrode 30 is disposed on a surface that is of the upper cavity mirror 23 and that faces away from the cavity layer 22, a plurality of micropillar structures 60 are disposed on a surface of the electrode 30, and the micropillar structure 60 is configured to suppress intensity modulation of the optical signal, so that the spatial light modulator provided in this application tends to perform pure phase modulation. FIG. 18 is a schematic plan view in which a first electrode 31 and a second electrode 32 are provided with a micropillar structure 60, where the first electrode 31 and the second electrode 32 are of an interdigital electrode architecture. In FIG. 19, an architecture of the micropillar structure 60 is added based on the implementation in FIG. 17. In the implementation shown in FIG. 19, each micropillar structure 60 is in a square shape, and is distributed on a branch of each electrode. The micropillar structure 60 may alternatively be in another shape, for example, a cylindrical shape, or a spherical shape. In an implementation, the micropillar structure 60 may be uniformly distributed on the electrode 30. In another implementation, for the micropillar structure 60, there may be distribution manners with different density in different regions of the electrodes 30. For example, density of micropillar structures 60 distributed near a central region of the phase adjustment unit is less than density of micropillar structures 60 near the edge region of the phase adjustment unit.

The first electrode 31 and the second electrode 32 of the electrode 30 of the single-layer architecture may be of a nanowire structure, and a material is doped Si, or the like.

In the foregoing implementation, the phase adjustment unit may include an architecture of one layer of single-layer architecture (for example, an interdigital electrode architecture and a parallel electrode architecture). In this application, a quantity of layers of electrodes of the single-layer architecture is not limited. To be specific, a phase adjustment unit of one pixel unit may include only one layer of electrodes of the single-layer architecture, and the layer of electrodes of the single-layer architecture may work independently, to generate a drive electric field, change refractive efficiency of the phase correction unit or coupling efficiency, and adjust a phase of reflected light. The phase adjustment unit of one pixel unit may alternatively include at least two layers of electrodes of the single-layer architecture, each layer of electrode of the single-layer architecture is independent, and a plurality of layers of electrodes of the single-layer architecture may be electrically connected to one drive circuit. The drive circuit may simultaneously drive all electrodes of the single-layer architecture, or may selectively drive some electrodes of the single-layer architecture based on a requirement.

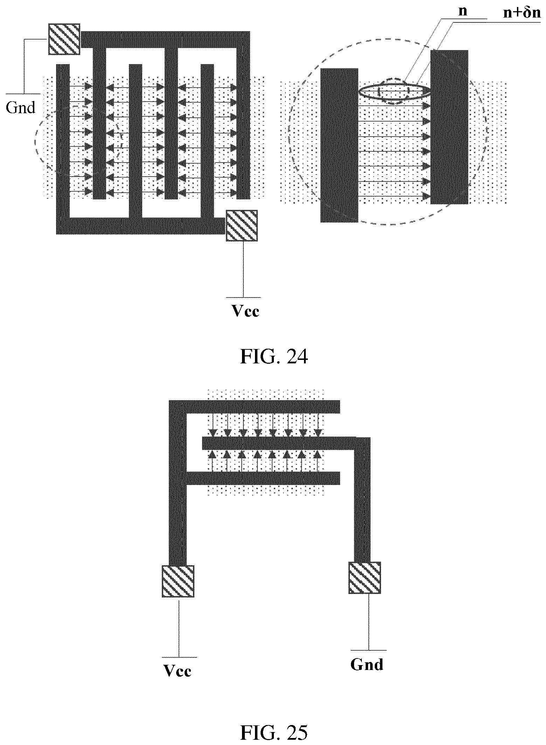

For an electric field distribution and a refractive index change of the electrode of the single-layer architecture, refer to FIG. 24. A diagram on a left side shows that one of the first electrode and the second electrode is connected to the reference voltage, and the other is grounded. The drive electric field is formed between the first electrode and the second electrode in the powered-on state. A line with an arrow between the first electrode and the second electrode in the figure indicates the electric field distribution. A diagram on a right side is an enlarged schematic diagram of a dotted coil part of the diagram on the left side, and a refractive index ellipsoid is marked, and indicates a change of a refractive index of the electro-optical medium of the phase adjustment unit. When no power is supplied, the refractive index ellipsoid is basically circular. For example, for a circular part indicated by the dotted line in the figure on the right side, the refractive index of the electro-optical medium is n. When the electrode is in a powered-on state, the refractive index ellipsoid is lengthened, and the refractive index of the electro-optical medium is n+δn.

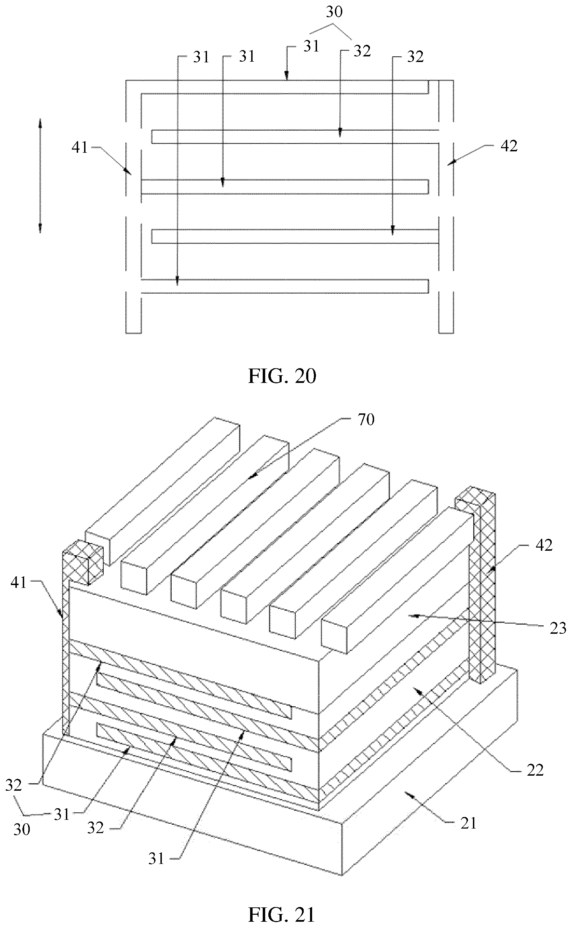

Refer to implementations shown in FIG. 20 to FIG. 23. The electrode 30 may be designed to be of a multi-layer architecture.

FIG. 20 is a schematic diagram of an electrode 30 of a multi-layer architecture. For the electrode 30 of the multi-layer architecture, "multi-layer" herein indicates at least two layers. In addition, the first electrode 31 and the second electrode 32 are both planar, and are sequentially and alternately disposed in a stacked manner in a first direction (a direction indicated by a bidirectional arrow in FIG. 20). The first direction is a direction in which the lower cavity mirror, the cavity layer, and the upper cavity mirror are sequentially disposed in a stacked manner, and the first direction may be understood as a direction perpendicular to the backplane. The first electrode 31 and the second electrode 32 are not located at a same layer, but are formed at different layers of the phase adjustment unit. It can be understood that each of the first electrode 31 and the second electrode 32 is of a film layered structure, and is distributed at a specific layer of the cavity layer or at a specific layer of the upper cavity mirror in a planar manner. Different electrodes 30 are located at different layers. In addition, the first electrode 31 and the second electrode 32 are alternately disposed in a stacked manner. To be specific, a second electrode 32 is disposed in a layered structure adjacent to one first electrode 31. One first electrode 31 may be sandwiched between two adjacent second electrodes 32. The first electrical connection portion 41 is electrically connected to the first electrode 31, and the second electrical connection portion 42 is electrically connected to the second electrode 32. As shown in FIG. 20, the first electrode 31 and the second electrode 32 partially overlap, a left edge region of the first electrode 31 does not overlap the second electrode 32, a right edge region of the second electrode 32 does not overlap the first electrode 31, the first connection portion 41 is connected to a leftmost edge location of the first electrode 31, and the second connection portion is connected to a rightmost edge location of the second electrode 32. In conclusion, a part that is of the first electrode 30 and that does not overlap the second electrode 30 is connected to the first connection portion 41, and a part that is of the second electrode 30 and that does not overlap the first electrode 30 is connected to the second connection portion 42. The first electrode 31 and the second electrode 32 may be layered structures parallel to each other.

Refer to FIG. 21. In a possible implementation, the electrode 30 is located inside the cavity layer 22, and both the first electrode 31 and the second electrode 32 are disposed inside the cavity layer 22. An advantage of manufacturing the electrode 30 inside the cavity layer 22 is as follows: A manufacturing process is simple, because the cavity layer 22 is of a single material, and whether transmittance or reflectivity is generated does not need to be considered. For the cavity layer 22, transmittance is controlled by using the material of the cavity layer 22, instead of being controlled by using a specific structure of the cavity layer 22. The electrode 30 changes the structure of the cavity layer 22, but imposes small impact on the transmittance, because the transmittance is controlled by using the material of the cavity layer 22. Dimensions of the lower cavity mirror 21 and the cavity layer 22 shown in FIG. 21 are different. To display a structure of the electrode 30, FIG. 21 shows only a part of the cavity layer 22 and a part of the upper cavity mirror 23. A display state in FIG. 21 does not indicate that the dimensions of the lower cavity mirror 21 and the cavity layer 22 in the phase adjustment unit are different.

In the implementation shown in FIG. 21, a specific architecture is that the cavity layer 22 includes two layers of an ITO thin film and a LiNbO3 thin film that are alternately distributed in a stacked manner. Specifically, there is an alternate and stacked distribution of one layer of LiNbO3 thin film, one layer of ITO thin film, one layer of LiNbO3 thin film, and one layer of ITO thin film. In another implementation, the cavity layer 22 may include three layers, four layers, or more layers, and materials of the two adjacent layers are different. The ITO thin film is the electrode 30, and the LiNbO3 thin film is the electro-optical medium between electrodes 30. A thickness of each layer of LiNbO3 thin film is 400 nm, and a thickness of each layer of ITO thin film is 50 nm. A length (perpendicular to a paper) of the ITO thin film is 4 um, and a width (parallel to the paper) is 2 um. An ITO thin film (constituting the first electrode) with an odd sequence number (1 and 3) communicates with a metal via (namely, the first electrical connection portion) perpendicular to a left side; and an ITO thin film (constituting the second electrode) with an even sequence number (2) communicates with a metal via (namely, the second electrical connection portion) perpendicular to a right side. A region between ITO thin films is defined as an interlayer, and polarization directions of LiNbO3 thin films between two adjacent layers are opposite.

In the implementation shown in FIG. 21, a protruding structure 70 is disposed on a surface that is of the upper cavity mirror 23 and that faces away from the cavity layer 22, namely, a surface that is of the phase adjustment unit and that faces away from the backplane. In other words, the protruding structure 70 is formed at a topmost layer of the upper cavity mirror 23. It can be further understood that the protruding structure 70 is located on a side that is of the upper cavity mirror 23 and that faces away from the cavity layer 22. In other words, the protruding structure 70 is a structure independent of the upper cavity mirror 23. The protruding structure 70 is disposed, so that the phase adjustment unit forms an asymmetric architecture, to suppress intensity modulation of the optical signal, so that the spatial light modulator provided in this application tends to perform pure phase modulation. The protruding structure 70 shown in FIG. 21 is in a slender cuboid shape, and the protruding structure 70 may be in another form such as a cylindrical shape, a square shape, or a spherical shape. In the implementation shown in FIG. 21, the first electrical connection portion 41 and the second electrical connection portion 42 are respectively located on two opposite sides of the electrode 30. In this implementation, the electrode 30 includes two first electrodes 31 and two second electrodes 32.

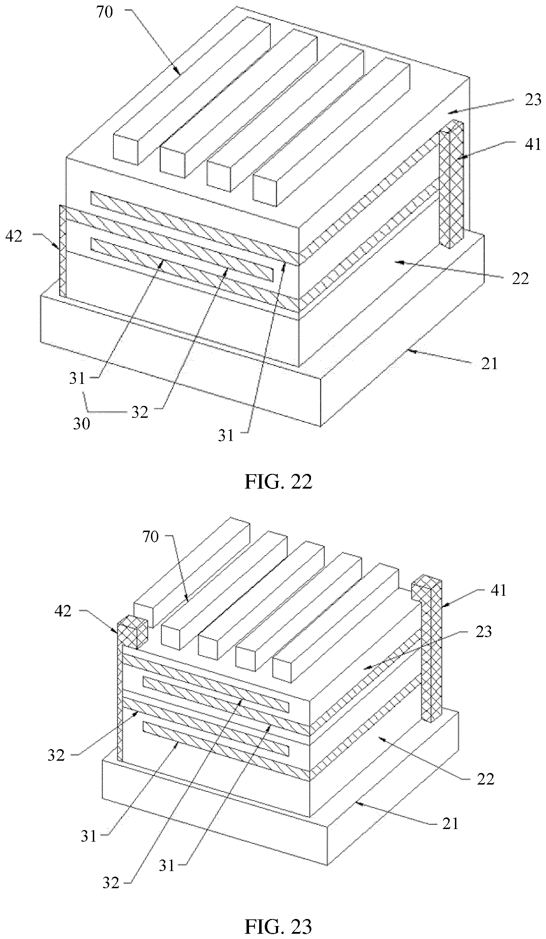

Refer to FIG. 22. In this implementation, the electrode 30 is manufactured in the upper cavity mirror 23, and a principle is the same as a principle of manufacturing the electrode 30 at the cavity layer 22. In this implementation, the electrode 30 includes two first electrodes 31 and one second electrode 32, the first electrical connection portion 41 is electrically connected to the two first electrodes 31, and the second electrical connection portion 42 is electrically connected to the one second electrode 32. Similar to the implementation shown in FIG. 21, in this implementation, the protruding structure 70 is also disposed on the surface that is of the upper cavity mirror 23 and that faces away from the cavity layer.

Refer to FIG. 23. In this implementation, a part of the electrode 30 is manufactured at the cavity layer 22, and a part of the electrode 32 is manufactured in the upper cavity mirror 23. Specifically, as shown in FIG. 23, the cavity layer 22 includes one layer of first electrode 31 and one layer of second electrode 32, and the upper cavity mirror 23 also includes one layer of first electrode 31 and one layer of second electrode 32. The first electrical connection portion 41 is electrically connected to all the first electrodes 31, and the second electrical connection portion 42 is electrically connected to all the second electrodes 32. Similar to the implementation shown in FIG. 21, in this implementation, the protruding structure 70 is also disposed on the surface that is of the upper cavity mirror 23 and that faces away from the cavity layer.

In an implementation in which the electrode 30 has the single-layer electrode architecture and the electrode 30 is located at a layer that is not a surface layer of the upper cavity mirror 23 (to be specific, the electrode 30 of the single-layer architecture is disposed at a specific layer in the upper cavity mirror 23, or a specific layer in the cavity layer 22, or a specific layer between the upper cavity mirror 23 and the cavity layer 22), a protruding structure (similar to the protruding structure shown in FIG. 21 to FIG. 23) may also be disposed on the surface that is of the upper cavity mirror 23 and that faces away from the cavity layer 22, so that the phase adjustment unit 20 constitutes an asymmetric architecture, to suppress intensity modulation of the optical signal, so that the spatial light modulator provided in this application tends to perform pure phase modulation.

In a possible implementation, when the electrode 30 has a multi-layer architecture, there are two or more first electrodes 30, and there are two or more second electrodes 30. Because an electric field is generated when the first electrode 30 and the second electrode 30 are in a powered-on state, two or more electrodes 30 are disposed, so that a required electric field can be generated by using a small voltage. A quantity of layers of first electrodes 30 or second electrodes 30 may be controlled to be two or three, because if the quantity of layers is excessively large, for example, more than three, it is difficult to implement manufacturing. Therefore, a maximum quantity of layers of electrodes 30 may be 6. There are three layers of first electrodes 30 and three layers of second electrodes 30.

A manufacturing process of each layer of electrode 30 may be as follows:
a sputtering process in which an electrode layer is manufactured on a surface of a specific layer of the phase adjustment unit through sputtering, and a material of the electrode layer may be doped silicon;
a photolithography process in which a photoresist layer is coated at the electrode layer, and a preset pattern of the photoresist layer is formed based on the photolithography process;
an etching process in which the preset pattern is formed at the electrode layer; and
a planarization process in which a patterned electrode is manufactured through planarization, and specifically, may be manufactured through polishing, for example, a chemical mechanical polishing process.

A quantity of layers of first electrodes 31 does not need to be the same as a quantity of layers of second electrodes 32. For example, in a possible implementation, the electrode 30 includes one layer of first electrode 31 and two layers of second electrodes 32, or includes two layers of second electrodes 32 and three layers of first electrodes 31.

For an electric field distribution and a refractive index change of the electrode 30 of the multi-layer architecture, refer to FIG. 25. FIG. 25 schematically shows an architecture including two layers of first electrodes and one layer of second electrode. The two layers of first electrodes are connected to the reference voltage of the drive circuit, and the one layer of second electrode is grounded. In the powered-on state, a drive electric field is formed at interlayers on two sides of the second electrodes, and directions of the drive electric fields at the two interlayers are opposite.

The first electrical connection portion 41 and the second electrical connection portion 42 include a pad and a conductive portion electrically connected between the pad and the drive circuit, the pad and the electrode 30 may be located in a same layered structure, and the conductive portion may be in a form of a via lead. Specifically, in a manufacturing process, a via may be formed between the layered structure in which the pad is located and the backplane 110, a metal conductive wire or a metal conductive pillar may be disposed in the via, or a metal layer may be formed on an inner wall of the via through electroplating, to form the conductive portion.

In the spatial light modulator provided in this application, both the electrode 30 and the electrical connection portion 40 electrically connected to the electrode 30 and the drive circuit are integrated in the phase correction unit. In other words, the electrode 30 and the electrical connection portion 40 can be synchronously manufactured in the phase correction unit in a process of manufacturing the phase correction unit. The electrode 30 and the electrical connection portion 40 do not need to be independently manufactured in a step other than a step of manufacturing the phase correction unit, and do not independently occupy space outside the phase correction unit. In this case, phase correction units may be seamlessly connected as a whole. In addition, the electric field generated after the electrode 30 is powered on is directly formed in the phase correction unit without a loss, and required intensity of an electric field can be generated by using a small voltage.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A spatial light modulator, comprising:
a backplane, inside which a drive circuit is disposed;
a phase adjustment unit, comprising a lower cavity mirror, a cavity layer, and an upper cavity mirror that are sequentially disposed in a stacked manner on the backplane, wherein the lower cavity mirror is located between the cavity layer and the backplane;
an electrode, comprising a first electrode and a second electrode that are insulated from each other, wherein the electrode is located inside or on a surface of the phase adjustment unit, and is located on a side that is of the lower cavity mirror and that faces away from the backplane; and
an electrical connection portion, electrically connected to the electrode and the drive circuit, to form a drive electric field between the first electrode and the second electrode and adjust a refractive index of the phase adjustment unit.

2. The spatial light modulator according to claim 1, wherein the drive circuit, the phase adjustment unit, the electrode, and the connection portion jointly form one pixel unit, the spatial light modulator comprises a plurality of pixel units, the plurality of pixel units are distributed in an array, and phase adjustment units of adjacent pixel units are seamlessly connected.

3. The spatial light modulator according to claim 1 or 2, wherein the electrode is disposed on a first surface; and
the first surface is a surface that is of the upper cavity mirror and that faces away from the cavity layer; or
the phase adjustment unit comprises a plurality of layered structures that are sequentially disposed in a stacked manner, and the first surface is a surface of one layered structure.

4. The spatial light modulator according to claim 3, wherein the first electrode comprises a first main line and at least two first branches extending from one side of the first main line, the second electrode comprises a second main line and at least two second branches extending from one side of the second main line, the first main line and the second main line are disposed opposite to each other, and the first branch and the second branch form an interdigital architecture.

5. The spatial light modulator according to claim 4, wherein the first branch and the second branch are linear, or the first branch and the second branch are curved.

6. The spatial light modulator according to claim 4, wherein the electrical connection portion comprises a first connection portion and a second connection portion that are insulated from each other, the first connection portion is connected to the first main line, the second connection portion is connected to the second main line, and the first connection portion and the second connection portion are distributed on two opposite sides of the electrode.

7. The spatial light modulator according to claim 3, wherein the first electrode and the second electrode synchronously extend in parallel from a first location on the first surface to a second location on the first surface.

8. The spatial light modulator according to claim 7, wherein the electrical connection portion comprises a first connection portion and a second connection portion that are insulated from each other; and
both the first connection portion and the second connection portion are located at the first location, and the first location is located at an outer edge of the electrode.

9. The spatial light modulator according to claim 1 or 2, wherein the lower cavity mirror, the cavity layer, and the upper cavity mirror are sequentially disposed in a stacked manner in a first direction, and the first electrode and the second electrode are alternately disposed in a stacked manner in the first direction.

10. The spatial light modulator according to claim 9, wherein the electrode is located inside the cavity layer.

11. The spatial light modulator according to claim 9, wherein the electrical connection portion comprises a first connection portion and a second connection portion that are insulated from each other, the first electrode and the second electrode partially overlap, a part that is of the first electrode and that does not overlap the second electrode is connected to the first connection portion, and a part that is of the second electrode and that does not overlap the first electrode is connected to the second connection portion.

12. The spatial light modulator according to claim 9, wherein there are two or more first electrodes, and there are two or more second electrodes.

13. The spatial light modulator according to claim 9, wherein a protruding structure is disposed on a surface that is of the phase adjustment unit and that faces away from the backplane, and the protruding structure is configured to suppress intensity modulation of an optical signal.

14. The spatial light modulator according to claim 1 or 2, wherein the electrode is disposed on a surface that is of the upper cavity mirror and that faces away from the cavity layer, a plurality of micropillar structures are disposed on a surface of the electrode, and the micropillar structure is configured to suppress intensity modulation of an optical signal.

15. The spatial light modulator according to claim 1 or 2, wherein the electrode is disposed on a surface that is of the upper cavity mirror and that faces away from the cavity layer, and an electro-optical medium is disposed between the first electrode and the second electrode, or an electro-optical medium is disposed between the first electrode and the second electrode and on a periphery of the electrode.

16. A wavelength selective switch, comprising an optical fiber array, a main lens, and the spatial light modulator according to any one of claims 1 to 15, wherein a light beam found by the optical fiber array is converted into collimated light after passing through the main lens, the collimated light enters the spatial light modulator, a spatial light collimator is configured to reflect and deflect the collimated light to form reflected light, and the reflected light passes through the main lens and is focused in the optical fiber array.
